Europäisches Patentamt

European Patent Office

Office européen des brevets

(19)

(11) Publication number : **0 371 430 B1**

# (12) EUROPEAN PATENT SPECIFICATION

(45) Date of publication of patent specification :
18.10.95 Bulletin 95/42

(51) Int. Cl.[6] : **H04M 1/50, H04M 1/00**

(21) Application number : 89121850.5

(22) Date of filing : 27.11.89

(54) **Holding sound generator for telephone.**

(30) Priority : **29.11.88 JP 155214/88 U**

(43) Date of publication of application :
06.06.90 Bulletin 90/23

(45) Publication of the grant of the patent :
18.10.95 Bulletin 95/42

(84) Designated Contracting States :
**DE GB NL**

(56) References cited :
EP-A- 0 280 126
FR-A- 2 536 612
GB-A- 2 047 443
US-A- 3 824 379
US-A- 3 832 639
US-A- 4 241 408
US-A- 4 769 836
ELEKTRONIK. vol. 35, no. 11, 30 May 1986,
MUNCHEN DE page 96; DR. F. MAYER LIN-
DENBERG 'Schieberegister ermöglicht
gebrochene Frequenzteilungsver- hältnisse'

(56) References cited :
**IEEE JOURNAL OF SOLID-STATE CIRCUITS.
vol. 18, no. 6, December 1983 NEW YORK US
pages 684 - 691; FAHEEM AKRAM & W. DAVID
PACE: "An integrated electronic telephone
circuit "
HITACHI REVIEW. vol. 34, no. 6, December
1985, TOKYO JP pages 287 - 290; KIKUCHI &
AKAZAWA: '4 bit microcomputer HD61827 for
telephone subset'**

(73) Proprietor : **ROHM CO., LTD.
21, Saiin Mizosaki-cho
Ukyo-ku
Kyoto-shi Kyoto 615 (JP)**

(72) Inventor : **Ikefuji, Yoshihiro ROHM CO., LTD.
21, Saiin Mizosaki-cho
Ukyo-ku
Kyoto-shi Kyoto 615 (JP)**

(74) Representative : **Tiedtke, Harro, Dipl.-Ing. et al
Patentanwaltsbüro
Tiedtke-Bühling-Kinne & Partner
Bavariaring 4
D-80336 München (DE)**

EP 0 371 430 B1

Note : Within nine months from the publication of the mention of the grant of the European patent, any
person may give notice to the European Patent Office of opposition to the European patent granted.
Notice of opposition shall be filed in a written reasoned statement. It shall not be deemed to have been
filed until the opposition fee has been paid (Art. 99(1) European patent convention).

EP 0 371 430 B1

## Description

This invention relates to a holding sound generator for a telephone, and more particularly to an apparatus for generating a holding sound by using a DTMF (Dual Tone Multifrequency) generating circuit.

Heretofore, to hold on the line during talking over telephone, a person at one end of the line has been used to send to another person at the other end of the line a holding sound, such as by a music box, according to need. To this end, Japanese Patent Laid-Open Publication No. 56056/1987 entitled "SEMICONDUCTOR CIRCUIT FOR TELEPHONE" discloses a holding sound generator built in a push-button telephone. This prior circuit is capable of generating a holding sound in the form of a musical sound from the output terminal, from which a DTMF signal is to be transmitted.

It has been a common knowledge that a DTMF signal representing an individual operating key can be obtained by modulating the frequency of a primary clock signal from a primary oscillator in conformity with the frequency standardized along every row and column of operating keys and then combining frequency signals corresponding to every row and column. Such an apparatus is for example disclosed in the US-A-4 769 836.

In producing a holding sound by a semiconductor circuit for telephones which issues a DTMF signal, however, since a clock signal is divided by a frequency-dividing ratio of a predetermined integral number, a primary clock signal of a high frequency is necessary to form a desired wide octave sound. This high frequency would increase the operating current and voltage for operation of the oscillator and division of frequency.

Since the frequency-dividing ratio is an integral number even if the frequency is set to a high level, it is difficult to restrict any frequency deviation so that a frequency output corresponding to the sound scale cannot be obtained.

With the foregoing prior art problems in view, it is an object of this invention to provide a holding sound generator in which, utilizing the concept disclosed in our copending Japanese Patent Laid-Open Publication No. 154836/1987 entitled "SELECTION SIGNAL GENERATOR", the frequency of a basic signal is set to a low level to restrict the consumption of electrical power and to reduce any frequency deviation.

This object is achieved by a holding sound generator as claimed in claim 1.

With this arrangement, since the reference frequency of the clock signal is divided by a frequency-dividing ratio which may be an integral as well as a fractional number, an arbitrary frequency-divided output can be obtained. Therefore a frequency-divided output small in frequency deviation and corresponding to the sound scale can be selectively obtained from a wide octave range, thus realizing a holding sound by a musical sound.

As the result that the frequency deviation becomes small even if the frequency of a basic signal is set to a low level by the thus setting of frequency-dividing ratio, the frequency of the basic signal can be lowered to thereby reducing the operating voltage and current.

The above and other advantages, features and additional objects of this invention will be manifest to those versed in the art upon making reference to the following detailed description and the accompanying drawings in which a structural embodiment incorporating the principles of this invention is shown by way of illustrative example.

FIG. 1 is a block diagram showing a holding sound generator embodying this invention;

FIG. 2 is a schematic block diagram showing a selection signal generating circuit in which the holding sound generator of this invention is incorporated;

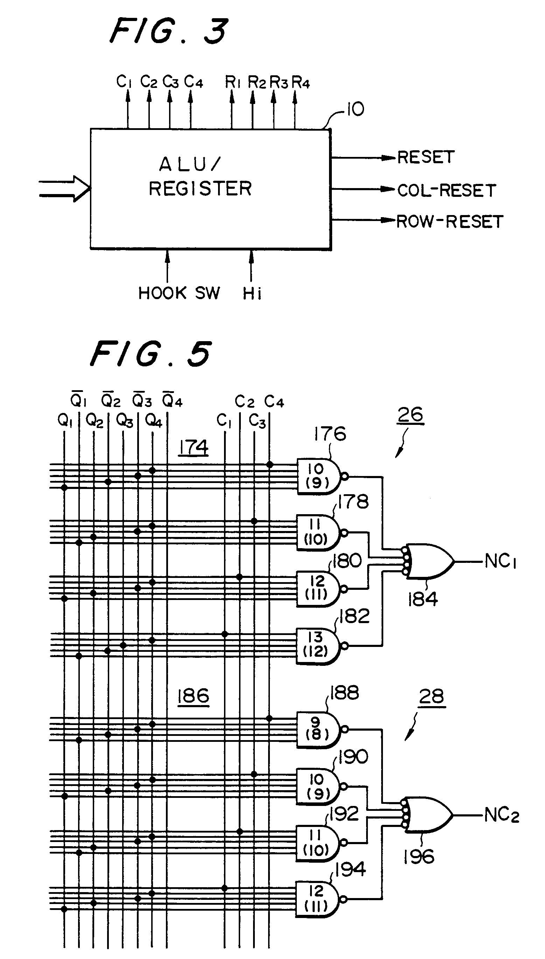

FIG. 3 is a block diagram showing practical output signals of an ALU circuit of FIG. 1;

FIG. 4 is a block diagram showing a front half part of a musical sound producing circuit in the holding sound generator of FIG. 2;

FIG. 5 is a detail circuit diagram showing a COLUMN frequency-dividing ratio memory circuit in the musical sound producing circuit of FIG. 4;

FIG. 6 is a timing chart showing the operation of a COLUMN frequency-dividing counter in the musical sound producing circuit of FIG. 4;

FIG. 7 is a detail circuit diagram showing a COLUMN ratio memory circuit in the musical sound producing circuit of FIG. 4;

FIG. 8 is a timing chart showing a COLUMN ratio counter in the musical sound producing circuit in FIG. 4;

FIG. 9 is a detail circuit diagram showing a ROW frequency-dividing ratio memory circuit in the musical sound producing circuit of FIG. 4;

FIG. 10 is a timing chart showing the operation of a ROW ratio counter in the musical sound producing circuit of FIG. 4;

FIG. 11 is a detail circuit diagram showing a ROW ratio memory circuit in the musical sound producing circuit of FIG. 4;

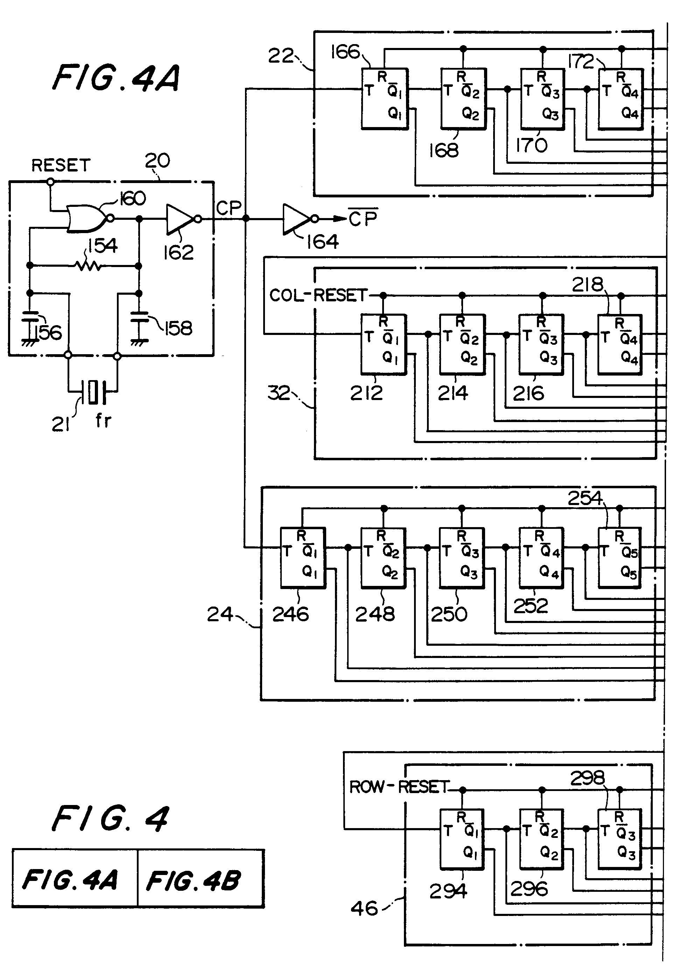

FIG. 12 is a timing chart showing the operation of a ROW frequency-dividing counter in the musical sound

2

producing circuit of FIG. 4;

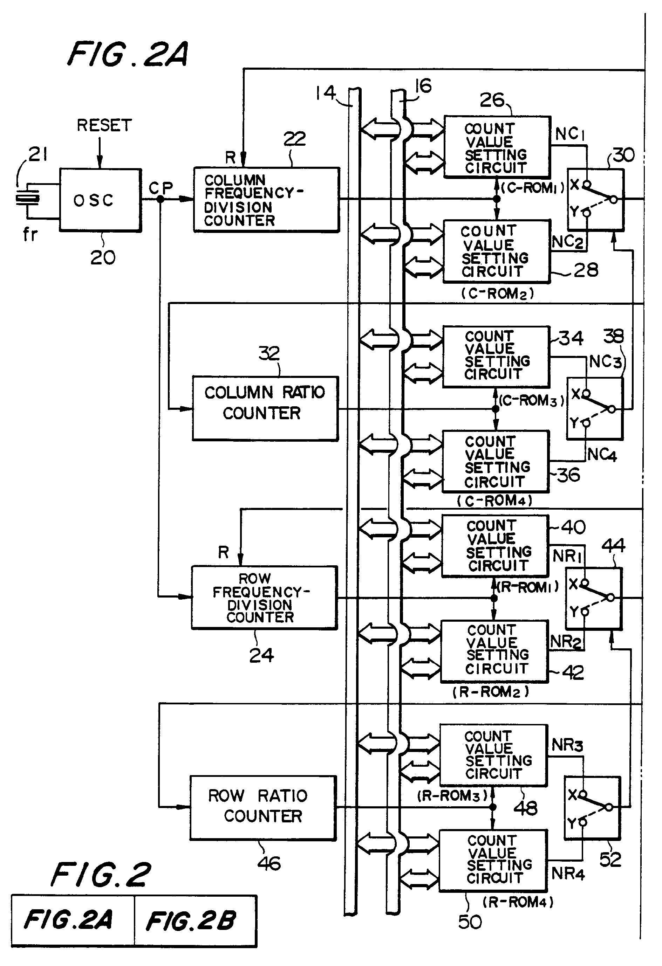

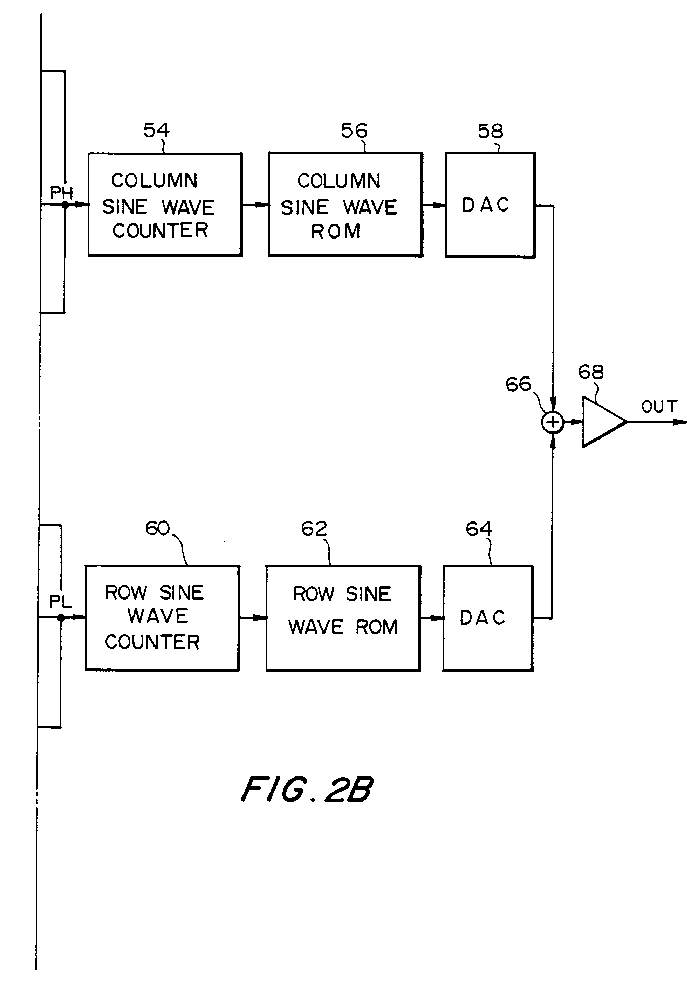

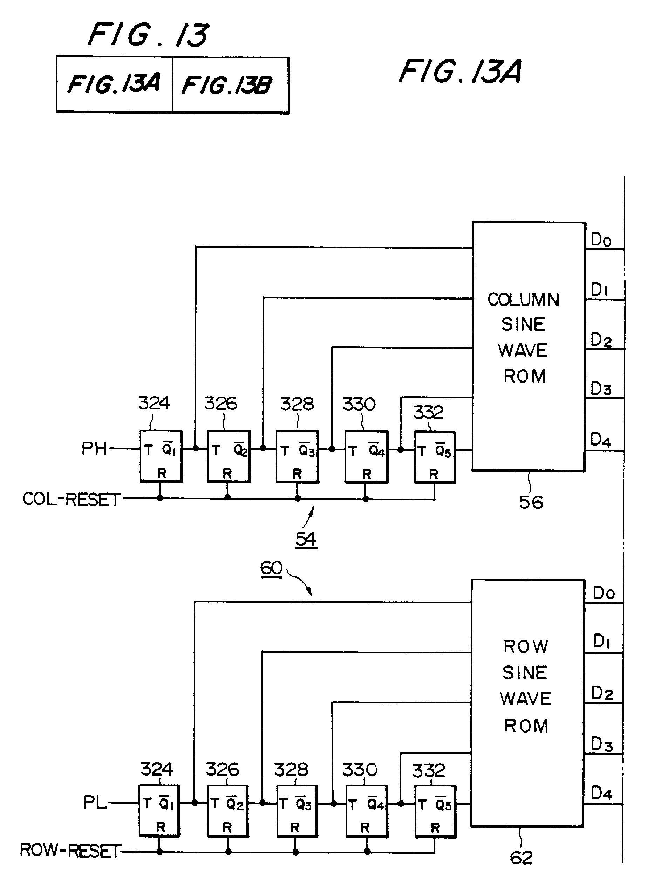

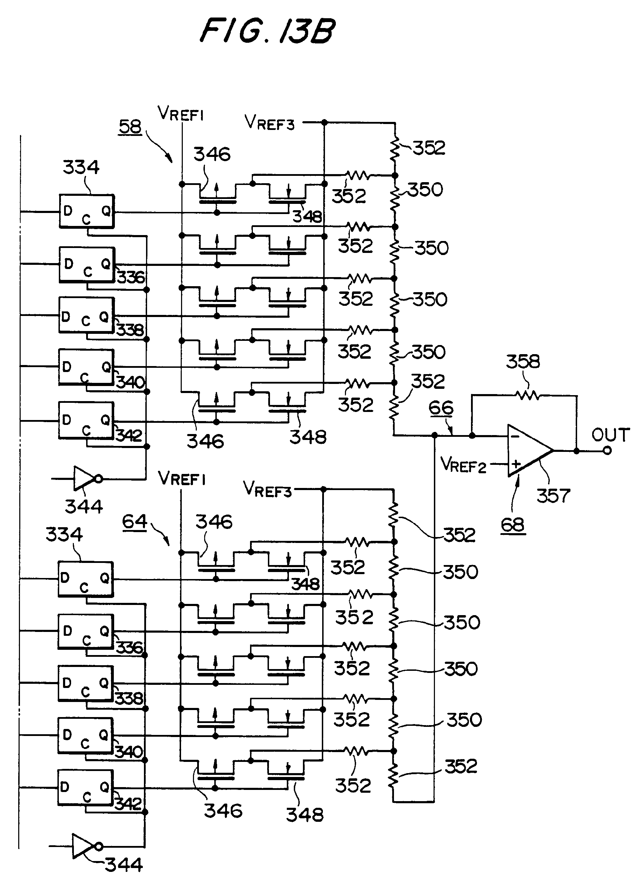

FIG. 13 is a rear half part of the musical sound producing circuit in the holding sound generator of FIG. 2;

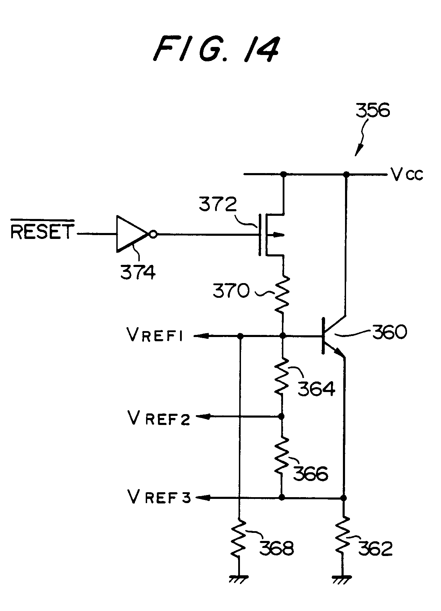

FIG. 14 is a circuit diagram showing a reference voltage setting circuit in the rear part of the musical sound producing circuit of FIG. 13;

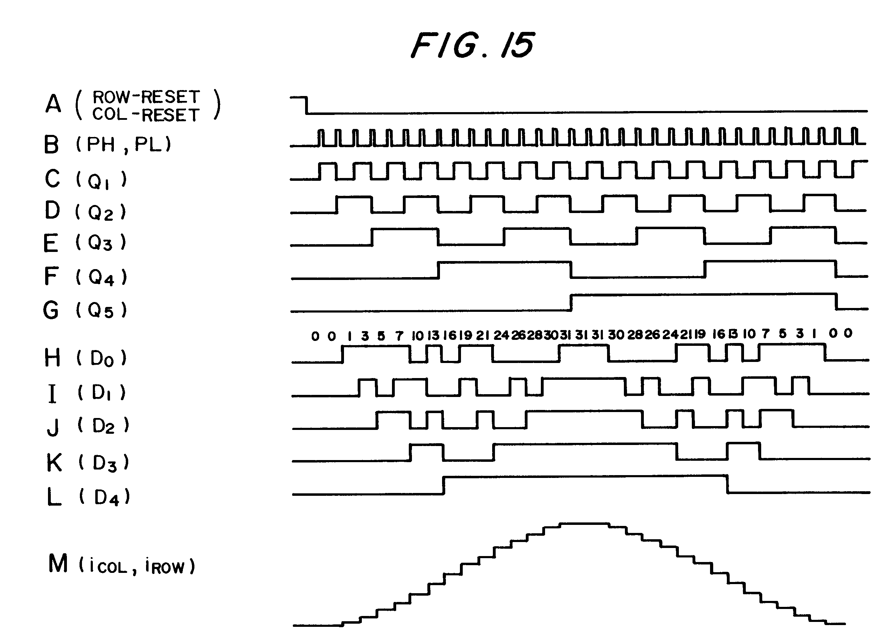

FIG. 15 is a timing chart showing the operation of the rear part of the musical sound producing circuit of FIG. 13; and

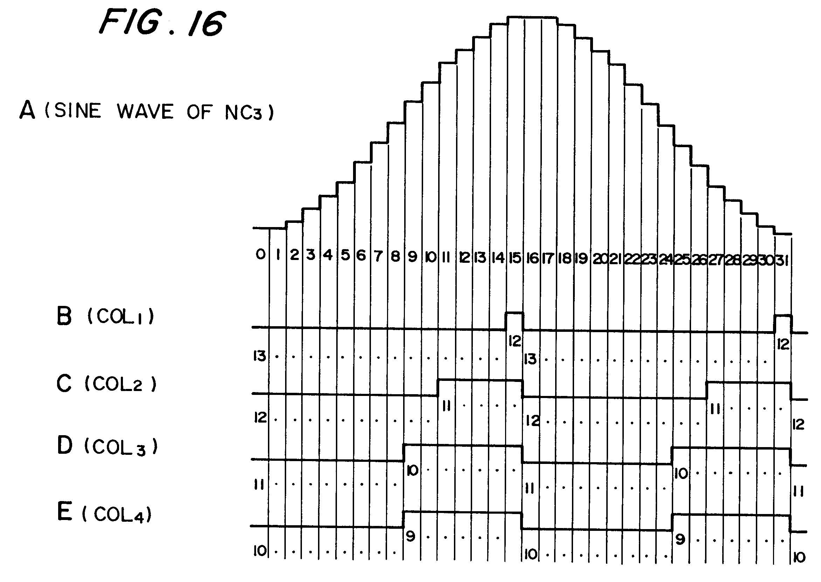

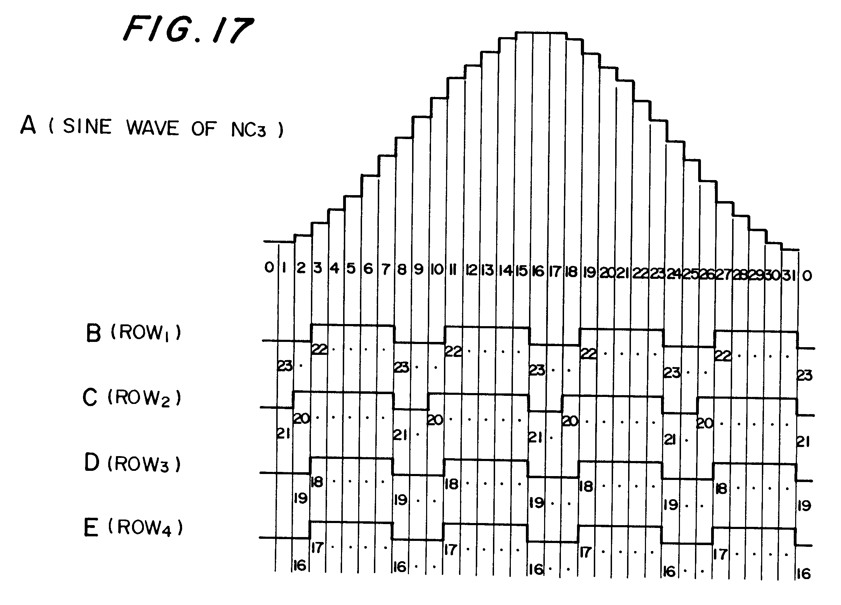

FIGS. 16 and 17 are timing charts showing the whole operation of the musical sound producing circuit of FIG. 2.

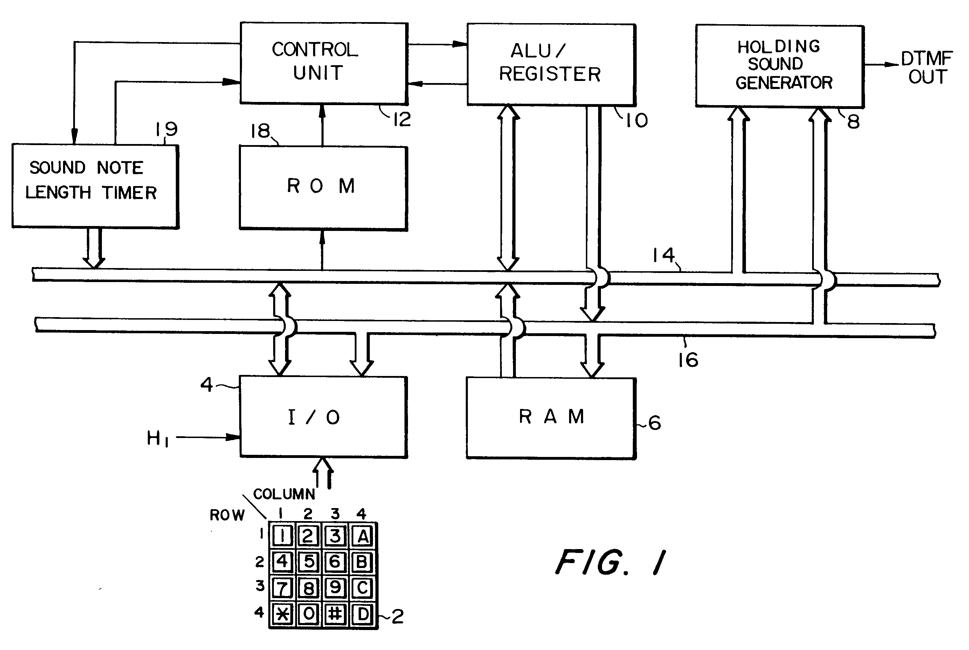

The principles of this invention are particularly useful when embodied in a holding sound generator, for a telephone, such as shown in FIGS. 1 and 2.

As shown in FIG. 1, a keyboard 2 serving as an inputting means for dial selection signals has ten keys as well as a plurality of ancillary symbol keys such as ∗, #, A, B, C, D, etc. In this embodiment, the arrangement and number of keys of the keyboard 2 are four rows and four columns, sixteen keys in total. In this keyboard 2, ten keys and other keys may be used in inputting a numerical value such as a telephone number and a secret code number at the other end of the line. Data which are input by the depressed keys are composed of positional information on the horizontal axis, ROW 1, 2, 3, 4, and on the vertical axis, COLUMN 1, 2, 3, 4. The individual positional information ROW 1, 2, 3, 4 and COLUMN 1, 2, 3, 4 is inputted to an input/output circuit (I/O) 4 serving as a key input logical circuit. To I/O circuit 4, in addition to the key inputs from the keyboard 2, a holding signal $H_1$ requesting for holding is added to ancillary keys.

After a hook switch (HOOK SW) operable in response to a receiver of the telephone is made conductive, the ALU 10 outputs designated signals $R_2$, $R_2$, $R_3$, $R_4$, $C_1$, $C_2$, $C_3$, $C_4$ as the respective bases of the sound scale signals and also outputs various reset signals RESET, ROW-RESET, COL-RESET, which are to be supplied to the holding sound generator.

When outputting a DTMF signal, the I/O circuit 4 cooperates not only with a RAM 6 capable of storing and reading data at anytime, but also with a holding sound producing circuit 8. The I/O circuit 4 further cooperates with a logical operation unit 10, such as an arithmetic and logical unit (ALU) and a register, and a control unit 12 via a data bus 14 and an address bus 16. The logical operation unit 10 and the control unit 12 constitutes a control system of the telephone. In a ROM 18, a frequency-dividing ratio in an integral or fractional number to be supplied to the holding sound producing circuit 8, and a system program for operating a telephone system are stored.

The control unit 12 controls a sound note length timer 19 to output the sound note length of a musical sound to be used as a holding sound.

The ROM 18 includes a predetermined holding sound scale storing means in which a sound scale range of a music is stored. When the holding sound is designated, a desired musical sound range is read from the ROM 18 so that the holding sound producing circuit 8 automatically sets frequency-dividing ratios (described below) successively in a sound scale range conforming to a desired music and outputs the same as pronunciation signals.

As a result, when outputting the holding sound, primary clock signals are divided in frequency successively at the frequency-dividing ratios conforming to the music read from the ROM 18, thereby controlling the necessary composing operation of a holding sound.

In this invention, a string of sound scales optionally selected from the octave range from the ROM 18 are read to be used as a holding sound. This sound scale range may be set independently, or may be selected to be used also as DTMF signals.

In the holding sound producing circuit 8, as shown in FIG. 2, clock pulses CP as primary signals produced by an oscillator 20 are divided in frequency, these frequency-divided outputs being combined, thereby forming a holding sound composed of sound scales as a holding signal $H_1$ is inputted.

In the oscillator 20, a primary oscillatory frequency fr is set by an oscillating element 21, and the oscillating action is reset by a reset signal RESET from the I/O circuit 4.

The clock pulses CP obtained by the oscillator 20 are added to a COLUMN frequency-dividing counter 22 constituting a high-frequency dividing means in which a frequency-dividing ratio in an integral number is selectable, and are also added to a ROW frequency-dividing counter 24 constituting a low-frequency dividing means in which a frequency-dividing ratio in an integral number is selectable. Thus these clock pulses CP are divided in frequency at the selected frequency-dividing ratio.

The frequency-divided output of the COLUMN frequency-dividing counter 22 are added to count-value setting circuits 26, 28 serving as a means for setting a frequency-dividing ratio of an integral number. This frequency-dividing ratio setting means, together with the COLUMN frequency-dividing counter 22, constitutes a high-frequency dividing means. In each of the count-value setting circuit 26, 28, a count value as an arbitrary frequency-dividing ratio is set from the ROM 18 via the control unit 12 and the logical operation unit 10. From the respective count-value setting circuits 26, 28, frequency-dividing ratios $NC_1$, $NC_2$ are outputted.

Specifically, to each of the count-value setting circuits 26, 28 in the form of C-ROM$_1$, C-ROM$_2$, arbitrary ones of designated signals $C_1$, $C_2$, $C_3$, $C_4$ as selection data obtained from the ALU 10 according to predetermined sound scales are added as read signals. From C-ROM$_1$ 26 and C-ROM$_2$ 28, the frequency-dividing ratios in integral number $NC_1$, $NC_2$ are respectively read. One of the frequency-dividing ratios $NC_1$, $NC_2$ is selected by a switch circuit 30, such as in the form of a flip-flop, serving as a frequency-dividing ratio selecting means. An output representing this selected frequency-dividing ratio is added to the COLUMN frequency-dividing counter 22 as a reset input R; and this output of frequency-dividing ratio is also added to a COLUMN ratio counter 32.

This COLUMN ratio counter 32 constitutes a part of a frequency-dividing-ratio proportion setting means. A plurality of frequency-dividing ratios obtained from the count-value setting circuits 26, 28 according to the count output of the COLUMN frequency-dividing counter 22 are counted; in this illustrated embodiment, one of the outputs representing two frequency-dividing ratios $NC_1$, $NC_2$ is counted. The count output is added to count-value setting circuits 34, 36 which, together with the COLUMN frequency-dividing counter 22, constitutes a part of the frequency-dividing-ratio proportion setting means.

The count-value setting circuits 34, 36 are composed of C-ROM$_3$, C-ROM$_4$, to which the designated signals $C_1$, $C_2$, $C_3$, $C_4$ are added from the ALU 10 as the selection data according to the string of holding sound scales. One of the frequency-dividing ratios $NC_1$, $NC_2$ is selected by a switch circuit 30, such as in the form of a flip-flop, serving as a frequency-dividing ratio selecting means. An output representing this selected frequency-dividing ratio is added to the COLUMN frequency-dividing counter 22 as a reset input R; and this output of frequency-dividing ratio is also added to a COLUMN ratio counter 32.

Either one of the frequency-dividing ratios $NC_3$, $NC_4$ read from the count-value setting circuits 34, 36 are selected by a switch circuit 38, such as in the form of a flip-flop, and are then added to the switch circuit 30 as a change-over signal to select a frequency-dividing ratio. Consequently, the switch circuit 30 is switched to one of contact points X, Y according to the respective frequency-dividing-ratio propotion $NC_3$, $NC_4$ of the count-value setting circuits 34, 36. The time of continuity on the side of either contact point X, Y is varied by the proportion $NC_3$. In the COLUMN frequency-dividing counter 22 and the COLUMN ratio counter 32, the two frequency-dividing ratios $NC_1$, $NC_2$ are alternately set in an arbitrary setting period.

On the low-frequency side, the frequency-divided output of the ROW frequency-divided counter 24 is added to count-value setting circuits 40, 42, such as in the form of R-ROM$_1$, R-ROM$_2$, serving as a means for setting a frequency-dividing ratio in an integral number. This frequency-dividing ratio setting means, together with the ROW frequency-dividing setting means, constitutes a low-frequency dividing means. In the count-value setting circuits 40, 42, count values as arbitrary frequency-dividing ratios are set from the ROM 18 via the control unit 12 and the logical operation unit 10; and the respective frequency-dividing ratios in integral numbers $NR_1$, $NR_2$ are outputted.

Specifically, to each of the count-value setting circuits 40, 42 in the form of R-ROM$_1$, R-ROM$_2$, arbitrary ones of designated signals $R_1$, $R_2$, $R_3$, $R_4$ as selection data obtained from the ALU 10 according to a string of predetermined sound scales are added as read signals. From R-ROM$_1$ 40 and R-ROM$_2$ 42, the frequency-dividing ratios in integral number $NR_1$, $NR_2$ are respectively read. Either frequency-dividing ratio $NR_1$, $NR_2$ are selected by a switch circuit 44, such as in the form of a flip-flop, and is then added to the ROW frequency-dividing counter 24 as a reset input R and also to a ROW ratio counter 46.

This ROW ratio counter 46 constitutes a part of a frequency-dividing-ratio proportion setting means. A plurality of frequency-dividing ratios obtained from the count-value setting circuits 40, 42 according to the count output of the ROW frequency-dividing counter 24 are counted; in this illustrated embodiment, one of the outputs representing two frequency-dividing ratios $NR_1$, $NR_2$ is counted. The count output is added to count-value setting circuits 48, 50 which, together with the ROW frequency-dividing counter 24, constitutes a part of the frequency-dividing-ratio proportion setting means.

The count-value setting circuits 48, 50 are composed of R-ROM$_3$, R-ROM$_4$, to which the designated signals $R_1$, $R_2$, $R_3$, $R_4$ are added from the ALU 10 as the selection data according to the string of holding sound scales.

Either one of the frequency-dividing ratios $NR_3$, $NR_4$ read from the count-value setting circuits 48, 50 are selected by a switch circuit 52, such as in the form of a flip-flop, and are then added to the switch circuit 44 as a change-over signal to select a frequency-dividing ratio. Consequently, the switch circuit 44 is switched to one of contact points X, Y according to the respective frequency-dividing-ratio proportion $NR_3$, $NR_4$ of the count-value setting circuits 34, 36. The time of continuity on the side of either contact point X, Y is varied by the proportion $NR_3$. In the ROW frequency-dividing counter 24 and the ROW ratio counter 46, the two frequency-dividing ratios $NR_1$, $NR_2$ are alternately set in an arbitrary setting period.

The high-frequency pulses PH obtained via the switch circuit 30 are added to and counted by a COLUMN sine wave counter 54, and the count output of the counter 54 is added, as a waveform read signal, to a COLUMN sine wave memory (ROM) 56 serving as a waveform storing means. The digital sine wave read from this COLUMN sine wave ROM 56 is converted to an analog sine wave by a digital/analog converter (DAC) 58.

Likewise, the low-frequency pulses PL obtained via the switch circuit 44 are added to and counted by a ROW sine wave counter 60, and the count output of the counter 54 is added, as a waveform read signal, to a ROW sine wave memory (ROM) 62 serving as a waveform storing means. The digital sine wave read from this COLUMN sine wave ROM 62 is converted to an analog sine wave by a digital/analog converter (DAC) 64.

Each of the high-frequency and low-frequency sine wave outputs is composed by a waveform composing circuit 66 serving as a signal composing means, thus forming a holding sound signal in the form of a DTMF signal. This holding sound signal is transmitted to a non-illustrated telephone circuit via a buffer circuit 68.

Consequently, in the present holding sound generator, a frequency-dividing ratio in an integral or fractional number is realized by a combination of the frequency-dividing ratios from the clock pulses CP, thus realizing a frequency output which is decimal frequency divided and which could not have been obtained by the conventional integral number frequency-dividing ratio.

One example of the frequency output in forming strings of musical sound signals is shown in Tables 1 and 2.

Table 1 shows values of frequency $f_0$ (Hz) representing about three octaves of chromatic sound scales, and set count values $N_1'$, $N_2'$, $N_3'$ for producing the respective frequency in this embodiment.

The above values $N_1'$, $N_2'$, $N_3'$ are based on the set values $N_1$ ($NC_1$, $NR_1$), $N_2$ ($NC_2$, $NR_{21}$), $N_3$ ($NC_3$, $NR_3$) for the registers inclosed in the count-value setting circuits 26, 28, 34, 36, 40, 42, 48, 50. Generally, since $N_1$, $N_2$, $N_3$ are represented by 0, 1, 2, the individual count value is converted into a number which is larger than "1" by the following equation:

$$N_1' = N_1 + 1$$
$$N_2' = N_2 + 1$$
$$N_3' = N_3 + 1$$

Table 2 shows the frequency-dividing ratio $R_{DIV}$ set in this embodiment, the output frequency f (Hz) based on this ratio, and a differential $\Delta f$ (%) between the output frequency f and the primary frequency $f_0$.

In Table 2, $R_{DIV}$ is a frequency-dividing ratio to be set, and is expressed by the following equation:

$$R_{DIV} = \frac{N_1' \times N_3' + N_2' \times (8 - N_3')}{8}$$

Namely, each of the switch circuits 38, 52 outputs a signal to change over the individual switch circuit 30, 44 per $N_3'$ in eight pulses in this example.

Therefore, if $N_1'$=35, $N_2'$=36, $N_3'$=4 as set,

$$R_{DIV} = \frac{35 \times 4 + 36 \times (8 - 4)}{8} = 35.5 .$$

The output frequency $f_0$ to be determined by the output primary frequency of the oscillator 20 can be obtained.

Further, in this embodiment, the primary frequency is set to 500 kHz. If the frequency-dividing ratio of the frequency dividing counter 22, 24 is set to 32, the frequency f of the frequency-divided output can be obtained by the equation:

$$f = 500 \text{ kHz} \div 32 \div R_{DIV} \text{ (Hz)}.$$

For example, if $R_{DIV} = 35.5$,

$$f = 500 \div 32 \div 35.5 = 440.14.$$

And the differential $\Delta f$ of the output frequency f with respect to the primary frequency $f_0$ representing a musical sound can be obtained by the following equation:

$$f = \frac{f}{f_0} \times 100 \text{ (%)}.$$

As is apparent from Tables 1 and 2, the differential $\Delta f$ (%) of the output frequency f can be found minimal from the fractional frequency-dividing ratio $R_{DIV}$.

Table 1

| | $f_0$ (Hz) | $N_1'$ | $N_2'$ | $N_3'$ |
|---|---|---|---|---|
| A | 440.00 | 35 | 36 | 4 |
| A$^\#$ | 466.17 | 33 | 34 | 4 |
| B | 493.89 | 31 | 32 | 3 |
| C | 523.25 | 29 | 30 | 1 |
| C$^\#$ | 554.37 | 28 | 29 | 7 |
| D | 587.33 | 26 | 27 | 3 |
| D$^\#$ | 622.25 | 25 | 26 | 7 |
| E | 659.26 | 23 | 24 | 2 |
| F | 698.46 | 22 | 23 | 5 |
| F$^\#$ | 739.99 | 21 | 22 | 7 |
| G | 783.99 | 19 | 20 | 1 |

Table 1 (continued)

| | $f_0$ (Hz) | $N_1'$ | $N_2'$ | $N_3'$ |
|---|---|---|---|---|
| G# | 830.61 | 18 | 19 | 2 |
| A | 880.00 | 17 | 18 | 2 |
| A# | 932.33 | 16 | 17 | 2 |
| B | 987.77 | 15 | 16 | 1 |
| C | 1046.50 | 14 | 15 | 1 |
| C# | 1108.73 | 14 | 15 | 7 |
| D | 1174.66 | 13 | 14 | 6 |
| D# | 1244.51 | 12 | 13 | 4 |
| E | 1318.51 | 11 | 12 | 1 |
| F | 1396.91 | 11 | 12 | 7 |
| F# | 1479.98 | 10 | 11 | 4 |
| G | 1567.98 | 10 | 10 | 1 |
| G# | 1661.22 | 9 | 10 | 5 |
| A | 1760.00 | 8 | 9 | 1 |
| A# | 1864.66 | 8 | 9 | 5 |
| B | 1975.53 | 7 | 8 | 1 |
| C | 2093.00 | 7 | 8 | 4 |
| C# | 2217.46 | 7 | 7 | 1 |
| D | 2349.32 | 6 | 7 | 3 |
| D# | 2489.02 | 6 | 7 | 6 |
| E | 2637.02 | 5 | 6 | 1 |
| F | 2793.83 | 5 | 6 | 3 |
| F# | 2959.96 | 5 | 6 | 6 |
| G | 3135.96 | 5 | 5 | 1 |

## Table 2

| | $R_{DIV}$ | f (Hz) | $\Delta f$ (%) |
|---|---|---|---|
| A | 35.500 | 440.14 | 0.03 |
| $A^\#$ | 33.500 | 466.42 | 0.05 |
| B | 31.625 | 494.07 | 0.04 |
| C | 29.875 | 523.01 | −0.05 |
| $C^\#$ | 28.125 | 555.56 | 0.21 |
| D | 26.625 | 586.85 | −0.08 |
| $D^\#$ | 25.125 | 621.89 | −0.06 |
| E | 23.750 | 657.89 | −0.21 |
| F | 22.375 | 698.32 | −0.02 |
| $F^\#$ | 21.125 | 739.64 | −0.05 |
| G | 19.875 | 786.16 | 0.28 |
| $G^\#$ | 18.750 | 833.33 | 0.33 |
| A | 17.750 | 880.28 | 0.03 |
| $A^\#$ | 16.750 | 932.84 | 0.05 |
| B | 15.875 | 984.25 | −0.36 |
| C | 14.875 | 1050.42 | 0.37 |
| $C^\#$ | 14.125 | 1106.19 | −0.23 |
| D | 13.250 | 1179.25 | 0.39 |
| $D^\#$ | 12.500 | 1250.00 | 0.44 |
| E | 11.875 | 1315.79 | −0.21 |
| F | 11.125 | 1404.49 | 0.54 |
| $F^\#$ | 10.500 | 1488.10 | 0.55 |
| G | 10.000 | 1562.50 | −0.35 |
| $G^\#$ | 9.375 | 1666.67 | 0.33 |

## Table 2 (continued)

| | $R_{DIV}$ | f (Hz) | $\Delta f$ (%) |
|---|---|---|---|
| A | 8.875 | 1760.56 | 0.03 |
| A# | 8.375 | 1865.67 | 0.05 |
| B | 7.875 | 1984.13 | 0.44 |
| C | 7.500 | 2083.33 | −0.46 |
| C# | 7.000 | 2232.14 | 0.66 |
| D | 6.625 | 2358.49 | 0.39 |
| D# | 6.250 | 2500.00 | 0.44 |
| E | 5.875 | 2659.57 | 0.86 |
| F | 5.625 | 2777.78 | −0.57 |
| F# | 5.250 | 2976.19 | 0.55 |
| G | 5.000 | 3125.00 | −0.35 |

FIG. 4 shows a front part of the holding sound producing circuit of FIG. 2 as follows.

### (a) Oscillator 20

The oscillator 20 includes a resistor 154 as an oscillating element, capacitors 156, 158, and an oscillatory member 21 for setting the primary oscillation frequency fr. The gate conditions of a NOR circuit 160 is restricted depending on the presence/absence of a reset signal RESET. Therefore, when the reset signal RESET is at a low level (L), the clock pulses CP are allowed to pass through, and the clock pulses CP and inverted clock pulses $\overline{CP}$ are taken out from inverters 162, 164, respectively.

### (b) COLUMN Frequency Dividing Counter 22, Count Value Setting Circuit (C-ROM$_1$, C-ROM$^2$) 26, 28 and Switch Circuit 30

The COLUMN frequency dividing counter 22 is composed of four T-flip-flop circuits (hereinafter called "T-FFs") 166, 168, 170, 172. The clock pulses CP are added to the timing input T of the T-FF 166. The high-frequency pulses PH are added to the reset input R of each T-FF 166, 168, 170, 172 from the output side of the switch 30. The inverted output $\overline{Q}$ at the previous step is the timing input T at the next step as the frequency-divided output. The inverted output $\overline{Q}$ and the non-inverted output Q of T-FFs 166, 168, 170, 172 are added to C-ROM$_1$ 26 and C-ROM$^2$ 28, respectively. In the illustrated embodiment, integral frequency-dividing ratios 13 (12), 12 (11), 11 (10), 10 (9) are stored in C-ROM$_1$ 26, while integral frequency-dividing ratios 12 (11), 11 (10), 10 (9), 9 (8) are stored in C-ROM$_2$ 28. The frequency-dividing ratio in parentheses represents an auxiliary frequency-dividing ratio (N) corresponding to the change-over of a frequency-dividing ratio (N').

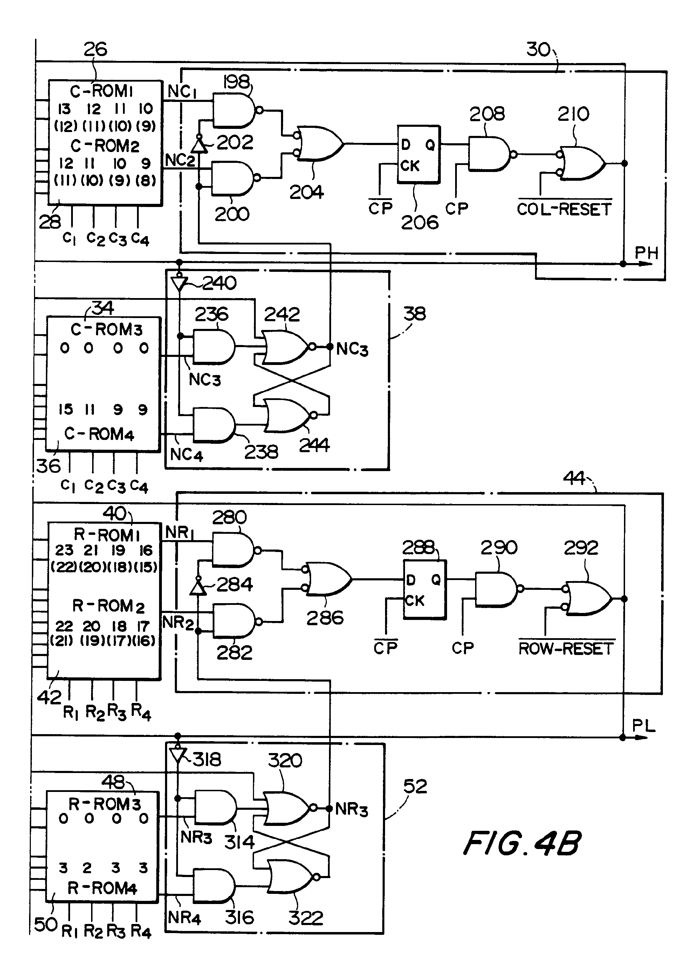

Further, as shown in FIG. 5, C-ROM$^1$ 26 includes four NAND circuits 176, 178, 180, 182 in a wire matrix circuit 174 for selecting the non-inverted outputs $Q_1$ - $Q_4$ and the inverted outputs $\overline{Q_1}$ - $\overline{Q_4}$ from the individual T-FFs 166, 168, 170, 172, and also for selecting the designated signals $C_1$ - $C_4$ from the ALU 10. The output of each NAND circuit 176 -182 is added to a negative logical OR circuit 184 to obtain a frequency-dividing ratio output NC$_1$. Likewise, C-ROM$_2$ 28 includes four NAND circuits 188, 190, 192, 194 in a wire matrix circuit 186 for selecting the non-inverted outputs $Q_1$ - $Q_4$ and the inverted outputs $\overline{Q_1}$ - $\overline{Q_4}$ from the individual T-FFs 166, 168, 170, 172, and also for selecting the designated signals $C_1$ - $C_4$ from the ALU 10. The output of each NAND circuit 188 -194 is added to a negative logical OR circuit 196 to obtain a frequency-dividing ratio output NC$_2$.

As shown in FIG. 4, the frequency-divided outputs NC$_1$, NC$_2$ are added to NAND circuits 198, 200 of the switch circuit 30. One NAND circuit 198 takes a negative logical product of the frequency-divided output NC$_1$

and the ratio output $NC_3$, from the C-ROM$_3$ 36, which output has been inverted by an inverter 202. The other NAND circuit 200 takes a negative logical product of the frequency-dividing ratio output $NC_2$ and the ratio output $NC_3$. As a result, the selection of the frequency-dividing ratio $NC_1$, $NC_2$ and the period of each frequency-dividing ratio $NC_1$, $NC_2$ are set by the ratio output $NC_3$.

The output of each NAND circuit 198, 200 is added to a negative logical OR circuit 204 to take a logical sum. This logical output is the data input D of a D-flip-flop circuit (hereinafter called "D-FF") 206. To the clock input CK of this D-FF 206, the inverted clock pulses $\overline{CP}$ obtained by the inverter 164 are added. These non-inverted output Q redulting from these inputs is added to a NAND circuit 208 so that a negative logical product is taken of the inverted clock pulses $\overline{CP}$, which is obtained from the inverter 164, and the non-inverted clock pulses CP, which is obtained from the inverter 162. The output of this NAND circuit 208 is added to a negative logical OR circuit 210 to take a logical sum of this output and an inverted reset signal $\overline{COL\text{-}RESET}$ of the reset signal COL-RESET obtained by the ALU 10, thus providing high-frequency pulses PH.

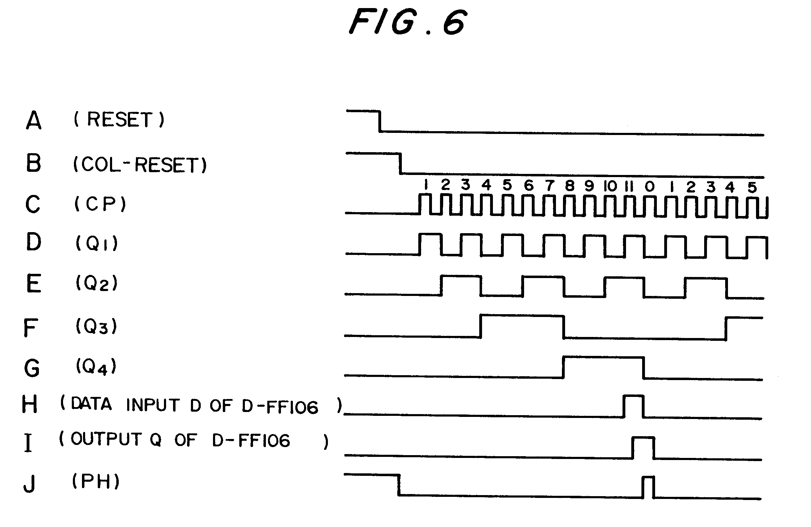

Therefore, with $COL_2$ of the keyboard 2 and the frequency-dividing ratio $NC^1$ selected in the COLUMN frequency-dividing counter 22 and the switch circuit 30, when the reset signal RESET of FIG. 6(A) and the inverted signal $\overline{COL\text{-}RESET}$ of the reset signal COL-RESET of FIG. 6(B) are added respectively to the oscillator 20 and the negative logical OR circuit 210, a clock pulse CP of FIG. 6(C) is outputted from the inverter 162. As a result, the non-inverted outputs $Q_1$, $Q_2$, $Q_3$, $Q_4$ of FIG. 6(D, E, F, G) are obtained from the T-FFs 66, 68, 70, 72, respectively, and are then added to C-ROM$_1$ 26 and C-ROM$_2$ 28 as predetermined.

In this case, the pulse of FIG. 6(H) obtained, via the NAND circuits 198, 200 and the negative logical OR circuit 204, from the frequency-dividing ratio $NC_1$, $NC_2$ obtained by the C-ROM$_1$ 26 and the C-ROM$_2$ 28 and also from the ratio output $C_3$ obtained by the C-ROM$_3$ 34 and the C-ROM$_4$ 36, is added to the data input D of the D-FF 206. Since the inverted clock pulse $\overline{CP}$ is added to the clock input CK of the D-FF 206, the D-FF 206 produces the non-inverted output Q of FIG. 6(I). Thus a high-frequency pulse PH of FIG. 6(J) has been obtained.D

(c) COLUMN Ratio Counter 32 and C-ROM$_3$ 34, C-ROM$_4$ 36

The COLUMN ratio counter 32 is composed of four T-flip-flop circuits (hereinafter called "T-FFs") 212, 214, 216, 218. The high-frequency pulse PH is added to the timing input T of the T-FF 212. The reset signal COL-RESET is added to the reset input R of each T-FF 212 - 218 from the ALU 10. The inverted output Q at the previous step is the timing input T at the next step as the frequency-divided output. The inverted output $\overline{Q}$ and the non-inverted output Q of T-FFs 212 - 218 are added to C-ROM$_3$ 34 and C-ROM$_4$ 36, respectively. In the illustrated embodiment, integral frequency-division ratios $NC_3'$ 0, 0, 0, 0 are stored in C-ROM$_3$ 34, while integral frequency-dividing ratios $NC_4$ 15, 11, 9, 9 are stored in C-ROM$_4$ 36.

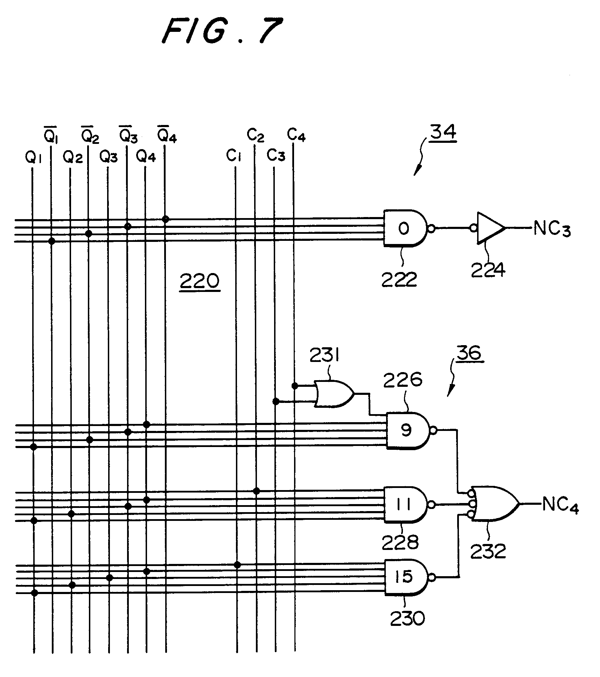

Further, as shown in FIG. 7, C-ROM$_3$ 34 and C-ROM$_4$ 36 include a NAND circuit 222 in a wire matrix circuit 220 for selecting the non-inverted outputs $Q_1$ - $Q_4$ and the inverted outputs $\overline{Q}_1$ - $\overline{Q}_4$ from the individual T-FFs 212, 214, 216, 218, and also for selecting the designated signals $C_1$ - $C_4$ from the ALU 10. The output of each NAND circuit 222 is added to an inverter 222 to obtain a frequency-dividing ratio output $NC_3'$. The wire matrix circuit 220 includes three NAND circuits 226, 228, 230, an OR circuit 231 and a negative logical circuit 232; the output each NAND circuits 226 - 230 is added to the negative logical circuit 232 to obtain the ratio output $NC_4$.

As shown in FIG. 4, the individual ratio $NC_3'$, $NC_4$ is added to NAND circuits 236, 238 of a switch circuit 38 to control the switch circuit 30. One NAND circuit 236 takes a negative logical product of the ratio output $NC_3'$ and the high-frequency pulse PH, which has been inverted by an inverter 240. The other NAND circuit 238 takes a negative logical product of the ratio output $NC_4$ and the high-frequency pulse PH, which has been inverted by an inverter 240. The outputs of the respective AND circuits 236, 238 are added to NOR circuits 242, 244 constituting flip-flops. In this case, the reset signal COL-RESET is added to the NOR circuit 242 as an gate signal, thus obtaining the ratio output $NC_3$ from the NOR circuit 242.

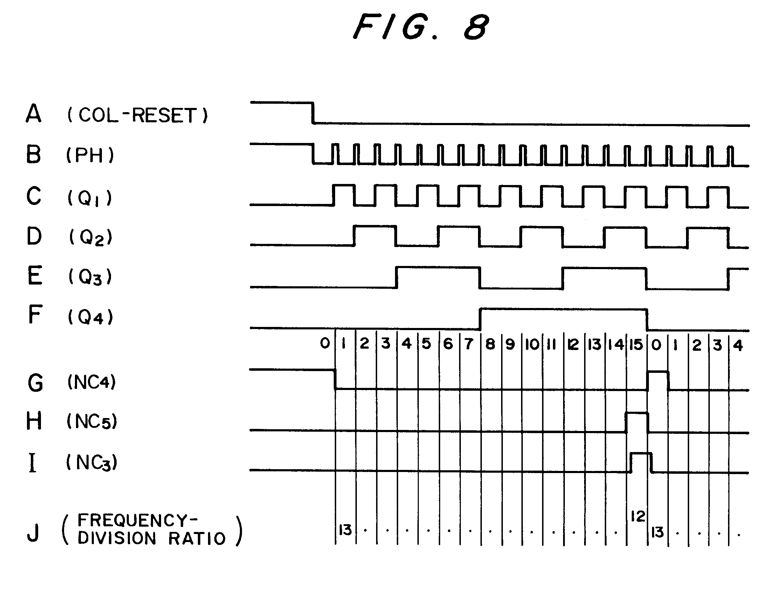

Therefore, when $COL_1$ is selected by operating the keyboard 2, the reset signal COL-RESET of FIG. 8(A) is added to the reset input R of the individual T-FF 212 - 218, and the high-frequency pulses PH of FIG. 6(J) and FIG. 8(B) are added to the timing input T of the T-FF 212. As a result, the non-inverted outputs $Q_1$, $Q_2$, $Q_3$, $Q_4$ of FIG. 8(C, D, E, F) are obtained from the T-FFs 212, 214, 216, 218, respectively, and are then added to C-ROM$_3$ 34 and C-ROM$_4$ 36. As shown in FIG. 8(J), the integral number frequency-dividing ratios 13, 12, for example, are set at a constant proportion by the ratio outputs $NC_3$, $NC_4$ of FIG. 8(G, H), which outputs have been obtained from C-ROM$_3$ 34 and C-ROM$_4$ 36, and also by the ratio output $NC_3$ of FIG. 8(I), which has been obtained from the high-frequency pulse PH by the switch circuit 38.

(d) ROW Frequency Dividing Counter 24, Count-value Setting Circuits (R-ROM$_1$, R-ROM$_2$) 40, 42 and Switch circuit 44

The ROW frequency dividing counter 24 is composed of five T-flip-flop circuits 246, 248, 250, 252, 254. The clock pulse CP is added to the timing input T of the T-FF 246. The low-frequency pulse PL is added to the reset input R of each T-FF 246 - 254 from the output side of the switch 44. The inverted output $\overline{Q}$ at the previous step is the timing input T at the next step as the frequency-divided output. The inverted output $\overline{Q}$ and the non-inverted output Q of T-FFs 246, 248, 250, 252, 254 are added to R-ROM$_1$ 40 and R-ROM$^2$ 42, respectively. In the illustrated embodiment, integral frequency-dividing ratios 23 (22), 21 (20), 19 (18), 16 (15) are stored in R-ROM$_1$ 40, while integral frequency-dividing ratios 22 (21), 20 (19), 18 (17), 17 (16) are stored in R-ROM$_2$ 42. The frequency-dividing ratio in parentheses represents an auxiliary frequency-dividing ratio (N) corresponding to the change-over of a frequency-dividing ratio (N').

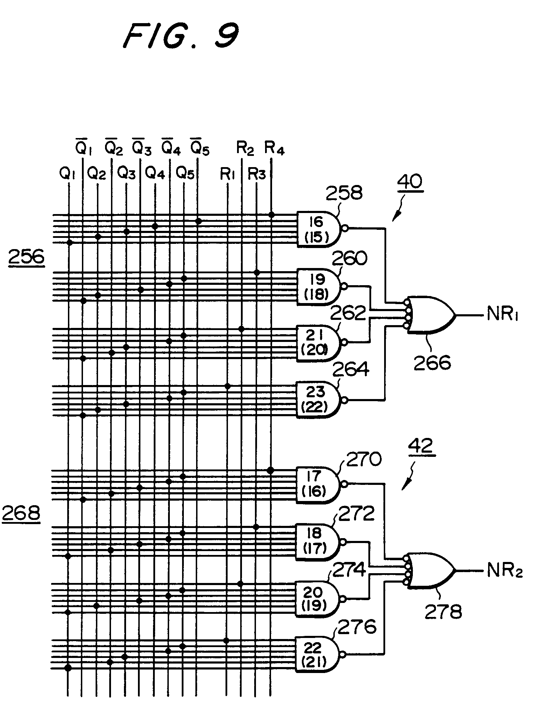

Further, as shown in FIG. 9, R-ROM$^1$ 40 includes four NAND circuits 258, 260, 262, 264 in a wire matrix circuit 256 for selecting the non-inverted outputs $Q_1$ - $Q_4$ and the inverted outputs $\overline{Q_1}$ - $\overline{Q_4}$ from the individual T-FFs 246, 248, 250, 252, 254 and also for selecting the designated signals $R_1$ - $R_4$ from the ALU 10. The output of each NAND circuit 258 - 264 is added to a negative logical OR circuit 266 to obtain a frequency-dividing ratio output NR$_1$. Likewise, R-ROM$_2$ 42 includes four NAND circuits 270, 272, 274, 276 in a wire matrix circuit 268 for selecting the non-inverted outputs $Q_1$ - $Q_4$ and the inverted outputs $\overline{Q_1}$ - $\overline{Q_4}$ from the individual T-FFs 246 - 254 and also for selecting the designated signals $R_1$ - $R_4$ from the ALU 10. The output of each NAND circuit 270 - 276 is added to a negative logical OR circuit 278 to obtain a frequency-dividing ratio output NR$_2$.

As shown in FIG. 4, the frequency-divided outputs NR$_1$, NR$_2$ are added to NAND circuits 280, 282 of the switch circuit 44. One NAND circuit 280 takes a negative logical product of the frequency-divided output NR$_1$ and the ratio output NR$_3$ from the R-ROM$_3$ 48 and R-ROM$_4$ 50, which output has been inverted by an inverter 284. The other NAND circuit 282 takes a negative logical product of the frequency-dividing ratio output NR$_2$ and the ratio output NR$_3$. As a result, the selection of the frequency-dividing ratio NR$_1$, NR$_2$ and the period of each frequency-dividing ratio NR$_1$, NR$_2$ are set by the ratio output NR$_3$.

The output of each NAND circuit 280, 282 is added to a negative logical OR circuit 286 to take a logical sum. This logical output is the data input D of a D-FF 288. To the clock input CK of this D-FF 288, the inverted clock pulse CP obtained by the inverter 164 is added. These non-inverted output Q resulting from these inputs is added to a NAND circuit 290 so that a negative logical product is taken of the inverted clock pulses $\overline{CP}$, which is obtained from the inverter 164, and the non-inverted clock pulses CP, which is obtained from the inverter 162. The output of this NAND circuit 290 is added to a negative logical OR circuit 292 to take a logical sum of this output and an inverted reset signal $\overline{ROW\text{-}RESET}$ of the reset signal ROW-RESET obtained by the ALU 10, thus providing low-frequency pulse PL.

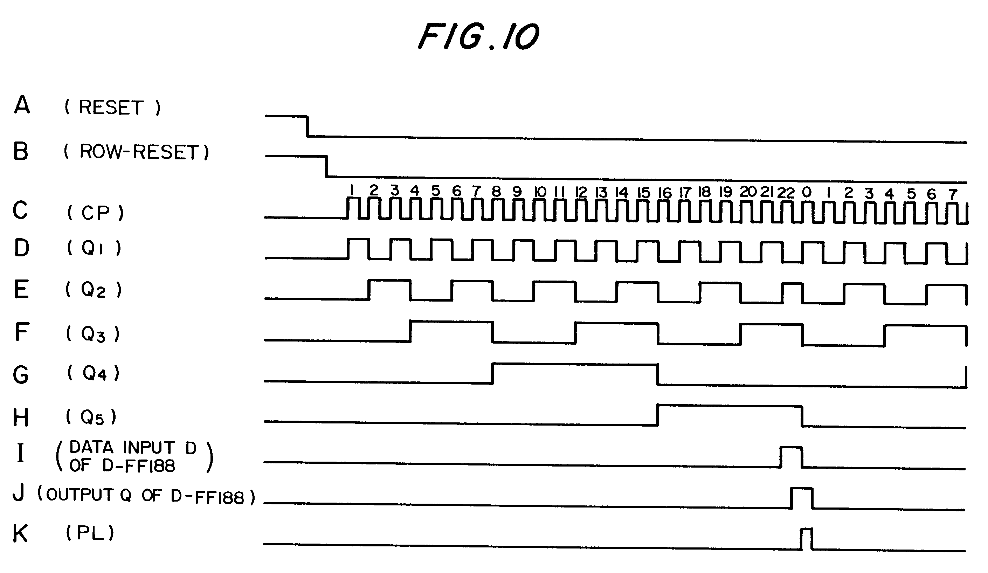

Therefore, with ROW$_2$ of the keyboard 2 and the frequency-dividing ratio NR$_1$ selected in the ROW-frequency-dividing counter 24 and the switch circuit 44, when the reset signal RESET of FIG. 10(A) and the inverted signal $\overline{ROW\text{-}RESET}$ of the reset signal ROW-RESET of FIG. 10(B) are added respectively to the oscillator 20 and the negative logical OR circuit 292, a clock pulse CP of FIG. 10(C) is outputted from the inverter 162. As a result, the non-inverted outputs $Q_1$, $Q_2$, $Q_3$, $Q_4$ of FIG. 10(D, E, F, G, H) are obtained from the T-FFs 246, 248, 250, 252, 254, respectively, and are then added to R-ROM$_1$ 40 and R-ROM$_2$ 42.

In this case, the pulse of FIG. 10(I) obtained, via the NAND circuits 280, 282 and the negative logical OR circuit 286, from the frequency-dividing ratio NR$_1$, NR$_2$ obtained by the R-ROM$_1$ 40 and the R-ROM$_2$ 42 and also from the ratio output NR$_3$ obtained by the switch circuit 52, is added to the data input D of the D-FF 288. Since the inverted clock pulse $\overline{CP}$ is added to the clock input CK of the D-FF 288, the D-FF 288 produces the non-inverted output Q of FIG. 10(J). Thus a low-frequency pulse PL of FIG. 10(K) has been obtained.

(e) ROW Ratio Counter 46 and Count-value Setting Circuits (R-ROM$_3$, R-ROM$_4$) 48, 50

The ROW ratio counter 46 is composed of three T-FFs 294, 296, 298. The low-frequency pulse PL is added to the timing input T of the T-FF 294. The reset signal ROW-RESET is added to the reset input R of each T-FF 294, 296, 298 from the ALU 10. The inverted output $\overline{Q}$ at the previous step is the timing input T at the next step as the frequency-divided output. The inverted output $\overline{Q}$ and the non-inverted output Q of T-FFs 294 - 298 are added to R-ROM$_3$ 48 and R-ROM$_4$ 50, respectively. In the illustrated embodiment, integral frequency-dividing ratios NR$_3$' 0, 0, 0, 0 are stored in R-ROM$_3$ 48, while integral frequency-dividing ratios NR$_4$ 3, 2, 3, 2 are stored in R-ROM$_4$ 50.

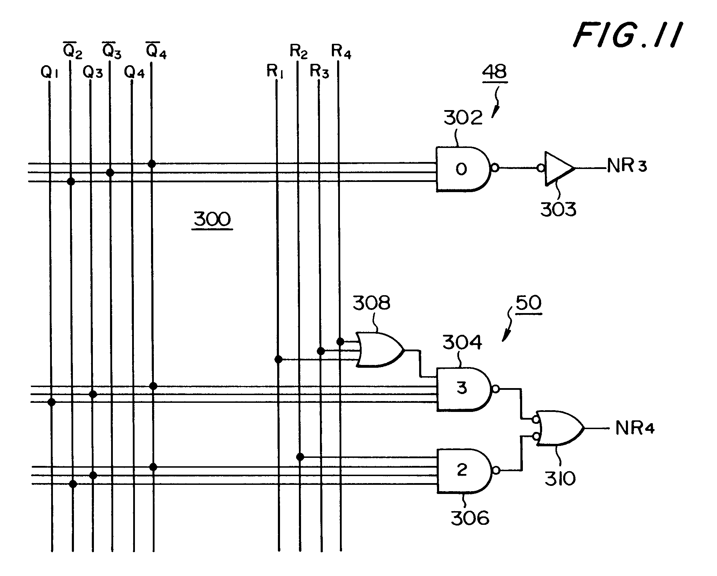

Further, as shown in FIG. 11, R-ROM$_3$ 48 and R-ROM$_4$ 50 include a NAND circuit 302 in a wire matrix circuit 300 for selecting the non-inverted outputs $Q_1$ - $Q_4$ and the inverted outputs $\overline{Q_1}$ - $\overline{Q_4}$ from the individual T-FFs 294 - 298 and also for selecting the designated signals $R_1$ - $R_4$ from the ALU 10. The out put of the NAND

EP 0 371 430 B1

circuit 302 is added to an inverter 303 to obtain a frequency-dividing ratio output $NR_3'$. The wire matrix circuit 300 includes two NAND circuits 304, 306 and an OR circuit 308; the output of each NAND circuit 304 - 306 is added to the negative logical circuit 310 to obtain the ratio output $NR_4$.

As shown in FIG. 4, the individual ratio $NR_3'$, $NR_4$ is added to NAND circuits 314, 316 of the switch circuit 52 to control the switch circuit 44. One NAND circuit 314 takes a negative logical product of the ratio output $NR_3'$ and the low-frequency pulse PL, which has been inverted by an inverter 318. The other NAND circuit 316 takes a negative logical product of the ratio output $NR_4$ and the low-frequency pulse PL, which has been inverted by an inverter 318. The outputs of the respective AND circuits 314, 316 are added to NOR circuits 320, 322 constituting flip-flops. In this case, the reset signal ROW-RESET is added to the NOR circuit 320 as an gate signal, thus obtaining the ratio output $NR_3$ from the NOR circuit 320.

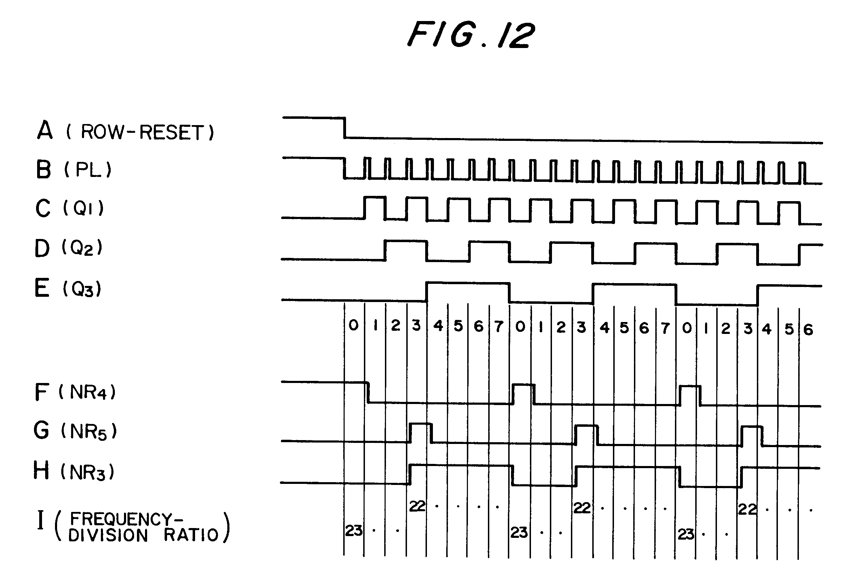

Therefore, when $ROW_1$ is selected by operating the keyboard 2, the reset signal ROW-RESET of FIG. 12(A) is added to the reset input R of the individual T-FF 294 - 298, and the low-frequency pulses PL of FIG. 12(B) similar to FIG. 10(K) are added to the timing input T of the T-FF 294. As a result, the non-inverted outputs $Q_1$, $Q_2$, $Q_3$ of FIG. 12(C, D, E) are obtained from the T-FFs 294, 296, 298, respectively, and are then added to R-ROM$_3$ 48 and R-ROM$_4$ 50. As shown in FIG. 12(I), the frequency-dividing ratios of integral numbers 22, 23, for example, are alternately set at a constant proportion by the ratio outputs $NR_3$, $NR_4$ of FIG. 12(G, H), which outputs have been obtained from R-ROM$_3$ 48 and R-ROM$_4$ 50, and also by the ratio output $NR_3$ of FIG. 12(H), which has been obtained from the low-frequency pulse PL by the switch circuit 52.

(f) Output Side Part of Switches 30, 44 of FIG. 12

FIG. 13 shows the practical structures of the COLUMN sine wave counter 54, the ROW sine wave counter 60, the COLUMN sine wave ROM 56, the ROW sine wave ROM 62, the DACs 58, 64, the waveform composing circuit 66, and the buffer circuit 68.

In FIG. 13, the COLUMN sine wave counter 54 is composed of five T-FFs 324, 326, 328, 330, 332. The high-frequency pulse PH obtained by the switch circuit 30 is added to the timing input T of the T-FF 324, while the reset signal COL-RESET is added to the reset input R of the individual T-FF 224 - 232. Thus the preceding inverted output $\overline{Q}$ corresponds to the next timing input T. The inverted output $\overline{Q}_1$ - $\overline{Q}_5$ of each T-FF 324 - 332 is added to the COLUMN sine wave ROM 56 in which COLUMN sine wave data are stored. The sine wave data $D_0$ - $D_4$ read from the COLUMN sine wave ROM 56 by the individual inverted output $\overline{Q}_1$ - $\overline{Q}_5$ is added to to the individual D-FF 334, 336, 338, 340, 342 as the data input D. The high-frequency pulse PH is inverted by an inverter 344 and is added to the individual D-FF 334 - 342 as the clock input C. Therefore, the sine wave data to be obtained by the non-inverted output Q of the individual D-FF 334 - 342 is added to DAC 58 and is thereby converted into a sine wave signal represented in analog.

In this embodiment, the DAC 58 comprises an analog switch assembly, each composed of field effect transistors (FETs) 346, 348, corresponding to the individual D-FFs 334 -342. The non-inverted output Q of the individual D-FF 334 - 342 is added to the gate of the FET 346, 348. The switching output obtained from the midportion between the two FETs 346, 348 is added to a resistor circuit 354 composed of a plurality of resistors 350, 352 and is thereby converted to a COLUMN sine wave current $i_{COL}$. In this case, reference voltages $V_{REF1}$, $V_{REF3}$ from a reference voltage setting circuit 356 of FIG. 14 are set for the individual FETs 346, 348. In the resistor circuit 354, if a resistance value of each resistor 350 is $R_1$, a resistance value of each resistor 352 is set to $2R_1$. However, for pre-emphasis correction of the COLUMN sine wave, the resistance value of the individual resistor 350, 352 of the ROW sine wave producing DAC 64 is set to a value 1.26 times that of the individual resistor 350, 352 of the COLUMN-side DAC 58.

Since the sine wave counter 60, the D-FFs 334 - 342 and the DAC 64 are identical in construction with their corresponding parts of the COLUMN-side circuit, their description is omitted here for clarity; instead, like reference numerals designate similar parts.

Further, the COLUMN sine wave current $i_{COL}$ obtained by the DAC 58 and the ROW sine wave current $i_{ROW}$ obtained by the DAC 64 are composed by the waveform composing circuit 66 which is fabricated by joining current passageways, whereupon both sine wave currents are added to the inverted input terminal (-) of an operational amplifier 357 constituting the buffer circuit 68. In this case the reference voltage $V_{REF2}$ from the reference voltage setting circuit 356 of FIG. 14 is added to the non-inverted input terminal (+) of the operational amplifier 357. At the output terminal and the inverted input terminal (-) of the operational amplifier 357, a feedback circuit is formed by the resistor 358, and a negative feedback amplifier is formed by the operational amplifier 357 and the resistor 358. Consequently, after the individual sine wave current $i_{COL}$, $i_{ROW}$ are composed by the waveform composing circuit 66, a sound scale signal represented in analog by the buffer circuit 68 is taken out from the output terminal.

In this embodiment, as shown in FIG. 14, in the reference voltage setting circuit 356, a resistor 362 is con-

12

EP 0 371 430 B1

nected to the emitter of a transistor 360, and resistors 364, 366, 368 dividing a diode voltage are connected between the base and emitter of the transistor 360. And a FET 372 is connected between the base and the collector of the transistor 360 via a resistor 370. The inverted reset signal $\overline{RESET}$ of the reset signal RESET obtained from the I/O 4 is inverted by the inverter 374 and is then added to the gate of the FET 372. The reference voltage $V_{REF1}$ set by the resistor 368 is taken out from the base of the transistor 360. The diode voltage between the base and emitter of the transistor 360 is divided by the resistors 364, 366 between which the reference voltage $V_{REF2}$ is taken out. The reference voltage $V_{REF3}$ is set by the resistor 362 and is taken out from the emitter of the transistor 360.

Therefore, in FIG. 13, when the reset signal COL-RESET or ROW-RESET of FIG. 13(A) is added to the reset input R of the individual T-FF 324 - 332 and when the high-frequency pulse PH or the low-frequency pulse PL of FIG. 15(B) is added to the timing input T of the T-FF 324, the non-inverted outputs $Q_1$, $Q_2$, $Q_3$, $Q_4$, $Q_5$ of FIG. 15(C, D, E, F, G) are obtained from the T-FFs 324, 326, 328, 330, 332, respectively. According to the respective inverted outputs $\overline{Q}_1$ - $\overline{Q}_5$ of these non-inverted outputs $Q_1$ - $Q_5$, digital sine wave data $D_0$, $D_1$, $D_2$, $D_3$, $D_4$ corresponding to the inverted outputs $\overline{Q}_1$ - $\overline{Q}_5$ are read from the COLUMN sine wave ROM 56 or ROW sine wave ROM 62, as shown in FIG. 15(H, I, J, K, L). As these digital sine wave data $D_0$ - $D_4$ are added to the gate of the FET pair 346, 348, the FET pair 346, 348 depending on the level of the individual digital sine wave data $D_0$ - $D_5$ are switched selectively so that the COLUMN sine wave current $i_{COL}$ or ROW sine wave current $i_{ROW}$ of FIG. 15(M) is obtained from the resistor circuit 354.

The COLUMN sine wave current $i_{COL}$ and the ROW sine wave current $i_{ROW}$ are combined to be outputted from the buffer circuit 68 as a DTMF signal.

FIG. 16 shows the waveform of the COLUMN ratio counter output $NC_3$ and the COLUMN sine wave signals obtained in correspondence with the positional information $COL_1$ - $COL_4$ of the keyboard 2. FIG. 17 shows the waveform of the ROW ratio counter output $NR_3$ and the ROW sine wave signals obtained in correspondence with the positional information $ROW_1$ - $ROW_4$ of the keyboard 2.

In this case, if the primary oscillatory frequency fr is set to 500 kHz by the oscillating member 21, the frequency-dividing ratios 12, 13 for $COL_1$ of FIG. 16(B), the frequency-dividing ratios 11, 12 for $COL_2$ of FIG. 16(C), the frequency-dividing ratios 10, 11 for $COL_3$ of FIG. 16(D) and the frequency-dividing ratios 9, 10 for $COL_4$ of FIG. 16(E) are set in the COLUMN frequency dividing counter 22 at regular time intervals with respect to the COLUMN sine wave signal of FIG. 16(A).

Likewise, the frequency-dividing ratios 22,23 for $ROW_1$ of FIG. 17(B), the frequency-dividing ratios 20, 21 for $ROW_2$ of FIG. 17(C), the frequency-dividing ratios 18, 19 for $ROW_3$ of FIG. 17(D) and the frequency-dividing ratios 16, 17 for $ROW_4$ of FIG. 17(E) are set in the ROW frequency dividing counter 24 at regular time intervals with respect to the ROW sine wave signal of FIG. 17(A).

The high frequency $f_{COL}$ and the low frequency $f_{ROW}$ can be determined by the following equations:

$$f_{COL} = 5 \times 10^5 / 32 \cdot N_{COL} \quad (1)$$
$$f_{ROW} = 5 \times 10^5 / 32 \cdot N_{ROW} \quad (2)$$

where $5 \times 10^5$ is the primary oscillatory frequency fr (= 500 kHz), $N_{COL}$ is the COLUMN-side mean frequency-dividing ratio, $N_{ROW}$ is the ROW-side mean frequency-dividing ratio, and 32 is the number of steps of the sine wave signal.

The mean frequency-dividing ratios $N_{COL}$, $N_{ROW}$ can be determined by the following equations:

$$N_{COL} = (NC_1 \cdot n_1 + NC_2 \cdot n_2)/32 \quad (3)$$
$$N_{ROW} = (NR_1 \cdot n_3 + NR_2 \cdot n_4)/32 \quad (4)$$

where $NC_1$, $NC_2$ are the frequency-dividing ratios set in $C\text{-}ROM_1$ 26 and $C\text{-}ROM_2$ 28 of the COLUMN frequency division counter 22, and $n_1$, $n_2$ are the number of appearances for a cycle of the sine wave of $NC_1$, $NC_2$. Likewise, $NR_1$, $NR_2$ are the frequency-dividing ratios set in $R\text{-}ROM_1$ 40 and $R\text{-}ROM_2$ 42 of the ROW frequency-dividing counter 24, and $n_3$, $n_4$ are the number of appearances for a cycle of the sine wave of $NR_1$, $NR_2$.

Assuming that $ROW_1$, for example, is selected, since $n_3 = 12$, $n_4 = 20$ from the waveform of FIG. 17(B),

$$N_{ROW} = (23 \times 12 + 22 \times 20)/32 = 22.375 \quad (5)$$

Therefore

$$f_{ROW} = 5 \times 10_5 / 22.375 = 698.32 \text{ (Hz)} \quad (6)$$

With the holding sound generator thus constructed, it is possible to obtain a holding sound representing a musical sound by the frequency output having a small differential frequency, compared to the frequency representing a musical sound signal by setting the frequency-dividing ratio to a fractional number. Further, since the frequency of a basic signal can be restricted to a low level, it is possible to reduce the operating voltage and current, thus minimizing the consumption of electrical energy.

13

## Claims

1. A holding sound generator for a telephone, comprising:

   a) an oscillator (20) for generating a clock signal of a reference frequency;

   b) storing means (18) for storing data determining frequency dividing ratios necessary for a DTMF signal, said storing means (18) being adapted to store data determining a predetermined sequence of integral as well as fractional frequency dividing ratios for designating a string of predetermined holding sound scales;

   c) a variable frequency dividing ratio setting means (22, 24, 26, 28, 30, 32, 34, 36, 38, 40, 42, 44, 46, 48, 50, 52) for dividing said reference frequency of said clock signal by said frequency dividing ratios determined by said string of predetermined holding sound scales stored in said storing means (18),

   d) outputting means (54, 56, 58, 60, 62, 64, 66, 68) for producing a holding sound signal according to the frequency-divided output of said variable frequency dividing ratio setting means.

2. A dual tone multifrequency generating circuit according to claim 1, wherein said storing means (18) is a ROM for storing a frequency dividing ratio necessary for a DTMF signal.

3. A dual tone multifrequency generating circuit according to claim 1, wherein said variable frequency dividing ratio setting means includes:

   a frequency division counter (22, 24) for determining a set of preset sine wave signal reading steps;

   first (26, 40) and second (28, 42) count-value setting circuits for concurrently outputting frequency dividing ratios different in value in each of said steps;

   a first switching circuit (30, 44) for changing over said frequency dividing ratios of said first and second count-value setting circuits; and

   a change-over circuit (32, 34, 36, 38, 46, 48, 50, 52) for varying the change-over timing of said first switching circuit.

4. A dual tone multifrequency generating circuit according to claim 3, wherein said change-over circuit includes:

   a ratio counter (32, 46) for counting the output of said first switching circuit (30, 44);

   third (34, 48) and fourth (36, 50) count-value setting circuits for counting the output of said ratio counter in terms of a predetermined preset value; and

   a second switching circuit (38, 52) for switchably controlling said change-over circuit according to the output of said third and fourth count-value setting circuits.

5. A dual tone multifrequency generating circuit according to claim 3, wherein said first (26, 40) and second (28, 42) count-value setting circuits are a count-value memory from which a desired count-value may be read according to the output of said storing means (18).

6. A dual tone multifrequency generating circuit according to claim 4, wherein the count values of said third (34, 48) and fourth (36, 50) count-value setting circuits are to be read therefrom according to the output of said storing means (18).

7. A dual tone multifrequency generating circuit according to claim 2, wherein said frequency dividing ratio stored in said storing means (18) is to be shared with the sound scale of said DTMF signal.

## Patentansprüche

1. Wartestellung- Schallgenerator für Telefon mit:

   a) einem Oszillator (20) zur Erzeugung eines Taktsignals mit einer Bezugsfrequenz;

   b) einem Speichermittel (18) zur Speicherung von Daten, die die für ein DTMF-Signal erforderlichen Frequenzteilverhältnisse festlegen, wobei das Speichermittel (18) eingerichtet ist, Daten zu speichern, die eine vorbestimmte Sequenz sowohl ganzzahliger als auch bruchzahliger Frequenzteilverhältnisse zur Benennung einer Tonfolge vorbestimmter Wartestellung- Tonleitern festlegen;

   c) einem variabelen Frequenzteilverhältnis- Einstellmittel (22, 24, 26, 28, 30, 32, 34, 36, 38, 40, 42, 44, 46, 48, 50, 52) zur Teilung der Bezugsfrequenz des Taktsignals durch die Frequenzteilverhältnisse, die von der Tonfolge der vorbestimmten, in dem Speichermittel (18) gespeicherten Wartestellung- Ton-

EP 0 371 430 B1

leitern festlegen werden, und mit

d) einem Ausgabemittel (54, 56, 58, 60, 62, 64, 66, 68) zur Erzeugung eines Wartestellung- Schallsignals gemäß dem frequenzgeteilten Ausgangssignal des variabelen Frequenzteilverhältnis-Einstellmittels.

2. Doppelton-Tastwahl-Erzeugungsschaltung nach Anspruch 1, deren Speichermittel (18) einen ROM zur Speicherung eines für ein DTMF- Signal erforderlichen Frequenzteilverhältnisses ist.

3. Doppelton- Tastwahl-Erzeugungsschaltung nach Anspruch 1, deren variables Frequenzteilverhältnis-Einstellmittel ausgestattet ist mit:

einem Frequenzteilzähler (22, 24) zur Festlegung eines Satzes voreingestellter Sinuswellensignal-Leseschritte;

ersten (26, 40) und zweiten (28, 42) Zählwert-Einstellschaltungen zur gleichzeitigen Abgabe von Frequenzteilverhaltnissen, deren Werte in allen Schritten unterschiedlich sind;

einem ersten Schalterstromkreis (30, 44) zum Umschalten der Frequenzteilverhältnisse der ersten und zweiten Zählwert-Einstellschaltungen; und mit

einem Umschalterstromkreis (32, 34, 36, 38, 46, 48, 50, 52) zur Änderung der Umschaltzeiteinstellung des ersten Schalterstromkreises.

4. Doppelton- Tastwahl- Erzeugungsschaltung nach Anspruch 3, deren Umschaltstromkreis ausgestattet ist mit:

einem Verhältniszähler (32, 46) zur Zählung des Ausgangssignals des ersten Schalterstromkreises (30, 44);

einer dritten (34, 48) und einer vierten (36, 50) Zählwert-Einstellschaltung zur Zählung des Ausgangssignals des Verhältniszählers in Form eines vorbestimmten Voreinstellwertes; und mit

einem zweiten Schalterstromkreis (38, 52) zur umschaltbaren Steuerung des Umschaltstromkreises gemäß dem Ausgangssignal der dritten und der vierten Zählwert- Einstellschaltung.

5. Doppelton- Tastwahl- Erzeugungsschaltung nach Anspruch 3, deren erste (26, 40) und zweite (28, 22, 42) Zählwert-Einstellschaltung ein Zählwertspeicher ist, aus dem ein gewünschter Zählwert gemäß dem Ausgangssignal des Speichermittels (18) gelesen werden kann.

6. Doppelton- Tastwahl- Erzeugungsschaltung nach Anspruch 4, bei der die Zählwerte aus der dritten (34, 48) und vierten (36, 50) Zählwert- Einstellschaltung gemäß dem Ausgangssignal des Speichermittels (18) zu lesen sind.

7. Doppelton- Tastwahl- Erzeugungsschaltung nach Anspruch 2, bei der das in dem Speichermittel 18 gespeicherte Frequenzteilverhältnis gemeinsam mit der Tonleiter des DTMF-Signals zu teilen ist.

**Revendications**

1. Générateur de tonalité d'attente pour un téléphone, comprenant:

a) un oscillateur (20) pour produire un signal d'horloge d'une fréquence de référence,

b) des moyens de stockage (18) pour stocker des données déterminant des rapports de division de fréquences nécessaires pour un signal de multiplication de fréquence à partir de deux sons (signal DTMF), ces moyens de stockage (18) étant adaptés pour stocker des données déterminant une séquence prédéterminée de rapports de division de fréquences entiers ainsi que fractionnaires pour désigner une chaîne d'échelles de tonalités d'attente prédéterminées;

c) des moyens de fixation de rapports de division de fréquences variables (22, 24, 26, 28, 30, 32, 34, 36, 38, 40, 42, 44, 46, 48, 50, 52) pour diviser ladite fréquence de référence du signal d'horloge par ces rapports de division de fréquences déterminé par la chaîne d'échelles de tonalités d'attente prédéterminés stockés dans les moyens de stockage (18);

d) des moyens de sortie (54,56,58,60,62,64,66,68) pour produire un signal de tonalité d'attente en fonction de la sortie à fréquence divisée de ces moyens de fixation de rapports de division de fréquences variables.

2. Circuit générateur de multiplication de fréquence à partir de deux sons selon la revendication 1, dans le-

15

quel les moyens de stockage (18) sont une mémoire morte (ROM) pour stocker un rapport de division de fréquence nécessaire pour un signal DTMF.

3. Circuit générateur de multiplication de fréquence à partir de deux sons selon la revendication 1, dans lequel les moyens de fixation de rapports de division de fréquence variables comprennent:
   un compteur de division de fréquences (22,24) pour déterminer un jeu d'étapes de lecture de signaux d'ondes sinusoïdales prédéterminées;
   un premier (26,40) et un deuxième (28,42) circuit de fixation de valeurs de compte pour émettre simultanément des rapports de division de fréquences de valeurs différentes dans chacune de ces étapes;
   un premier circuit de commutation (30,34) pour commuter les rapports de division de fréquences des premier et deuxième circuits de fixation de valeurs de compte; et
   un circuit de commutation (32,34,36,38,46,48,50,52) pour faire varier le minutage de commutation du premier circuit de commutation.

4. Circuit générateur de multiplication de fréquences à partir de deux sons dans lequel le circuit de commutation comprend:
   un compteur de rapport (32,46) pour compter la sortie du premier circuit de commutation (30,44);
   un troisième (34,48) et un quatrième (36,50) circuit de fixation de valeurs de compte pour compter la sortie du compteur de rapports en termes de valeurs préfixées prédéterminées; et
   un deuxième circuit de commutation (38,52) pour commander de façon commutable le circuit de commutation en fonction de la sortie des troisième et quatrième circuits de fixation de valeurs de compte.

5. Circuit générateur de multiplication de fréquences à partir de deux sons selon la revendication 3, dans lequel les premier (26,40) et deuxième (28,42) circuits de fixation de valeurs de compte sont une mémoire de valeurs de compte dont on peut extraire une valeur de compte désirée en fonction de la sortie des moyens de stockage (18).

6. Circuit générateur de multiplication de fréquences à partir de deux sons selon la revendication 4, dans lequel les valeurs de compte des troisième (34,48) et quatrième (36,50) circuits de fixation de valeurs de compte doivent en être extraites en fonction de la sortie des moyens de stockage (18).

7. Circuit générateur de multiplication de fréquences à partir de deux sons selon la revendication 2, dans lequel le rapport de division de fréquences stocké dans les moyens de stockage (18) doit être partagé avec l'échelle de sons du signal DTMF.

FIG. 1

# FIG.2A

## FIG.2

| FIG.2A | FIG.2B |
|--------|--------|

*FIG.2B*

# FIG. 3

# FIG. 5

EP 0 371 430 B1

FIG.4A

FIG. 4

| FIG.4A | FIG.4B |

21

FIG.4B

# FIG.6

| | | |
|---|---|---|
| A | ( RESET ) | |
| B | (COL-RESET) | |
| C | (CP) | 1 2 3 4 5 6 7 8 9 10 11 0 1 2 3 4 5 |
| D | ($Q_1$) | |
| E | ($Q_2$) | |
| F | ($Q_3$) | |
| G | ($Q_4$) | |
| H | (DATA INPUT D OF D-FF106 ) | |
| I | (OUTPUT Q OF D-FF106 ) | |
| J | (PH) | |

EP 0 371 430 B1

# FIG . 7

# FIG. 8

A (COL-RESET)
B (PH)
C (Q₁)
D (Q₂)
E (Q₃)
F (Q₄)
G (NC4)
H (NC5)
I (NC3)
J (FREQUENCY-DIVISION RATIO)

EP 0 371 430 B1

FIG. 9

# FIG.10

A (RESET)
B (ROW-RESET)
C (CP)
D (Q₁)
E (Q₂)
F (Q₃)
G (Q₄)
H (Q₅)
I (DATA INPUT D OF D-FF188)
J (OUTPUT Q OF D-FF188)
K (PL)

FIG.II

EP 0 371 430 B1

FIG.12

# FIG . 13

| FIG.13A | FIG.13B |

# FIG.13A

# FIG. 13B

# FIG. 14

FIG. 15

A ( ROW-RESET / COL-RESET )

B (PH, PL)

C (Q₁)

D (Q₂)

E (Q₃)

F (Q₄)

G (Q₅)

0 0 1 3 5 7 10 13 16 19 21 24 26 28 30 31 31 31 30 28 26 24 21 19 16 13 10 7 5 3 1 0 0

H (D₀)

I (D₁)

J (D₂)

K (D₃)

L (D₄)

M (iCOL, iROW)

EP 0 371 430 B1

FIG.16

A (SINE WAVE OF NC3)

B (COL1)

C (COL2)

D (COL3)

E (COL4)

EP 0 371 430 B1

FIG. 17

A ( SINE WAVE OF NC3 )

B (ROW₁)

C (ROW₂)

D (ROW₃)

E (ROW₄)

EP 0 371 430 B1